# EUROPÄISCHE PATENTANMELDUNG

(11) **EP 1 404 113 A1**
(43) Veröffentlichungstag der Anmeldung: **31.03.2004**
(21) Anmeldenummer: 02021175.1
(22) Anmeldetag: 24.09.2002
(51) Int. Cl.: H04N 1/40, H04N 1/41

(54) **Verfahren zur automatischen Bearbeitung digitaler Bilddaten**

(71) Anmelder: Agfa-Gevaert AG, 51373 Leverkusen (DE)
(72) Erfinder: Schuhrke, Thomas, 81549 München (DE); Rother, Martin, 81547 München (DE)

(57) **Zusammenfassung**

Die Erfindung betrifft ein Verfahren zur automatischen Bearbeitung digitaler Bilddaten, bei dem die Eingabebilddaten in komprimierter Form vorliegen und mehrere Verfahrensschritte auf die komprimierten oder vor der Bearbeitung dekomprimierten Bilddaten im Rahmen der Bildbearbeitung angewandt werden. Erfindungsgemäß werden Steuerdaten aus den noch komprimierten Bilddaten gewonnen welche die Bildbearbeitungsschritte automatisch steuern.

## Beschreibung

Die Erfindung betrifft ein Verfahren zur automatischen Bearbeitung digitaler Bilddaten, welche in komprimierter Form vorliegen, nach dem Oberbegriff von Anspruch 1.

Verfahren zur Bearbeitung digitaler Bilddaten sind seit langem bekannt. Bei Bilddaten, die in komprimierter Form vorliegen, sind dabei zwei Vorgehensweisen gängig.

Eine mögliche Vorgehensweise besteht darin, die komprimierten Bilddaten zu dekomprimieren bevor die Bilddaten bearbeitet werden. Die Bearbeitung der Bilddaten erfolgt dann wie beispielsweise in der DE 36 29 409 beschrieben. Hier werden zur Bearbeitung der Daten verschiedene Filter und Kennlinien angewandt. So wird beispielsweise das durch ein Filter gewonnene Hochpasssignal mittels einer Kennlinie verstärkt, um den Detailkontrast im Bild anzuheben, also eine Bildverschärfung vorzunehmen. Weiter wird vorgeschlagen, das auftretende, mittlere Rauschsignal (im Hochpasssignal) zu unterdrücken, um damit die Bildkörnigkeit zu reduzieren. Auch diese Unterdrückung erfolgt mittels einer Kennlinie. Des Weiteren wird in dieser Schrift vorgeschlagen, verschiedene Kennlinien auf Bilddaten unterschiedlicher Helligkeit anzuwenden, um so den Kontrast innerhalb der Bilddaten unterschiedlich zu beeinflussen.
Die Bearbeitung digitaler Bilddaten umfasst im Allgemeinen Änderungen des Kontrastes, der Farbsättigung, der Schärfe, der Dichte bzw. des Dichteumfangs, der Kömigkeit und des Farbtons. Eine kurze Abhandlung dieser Bildbearbeitungsverfahren ist im Textheft Fotografie des Fonds der chemischen Industrie, Auflage 1999, Seite 55 ff gegeben. Ferner sind lokale Bildmodifikationen, wie die Retusche sogenannter roter Augen, welche bei Blitzlichtaufnahmen entstehen, bekannt. Sobald dann infolge eines der geschilderten Bildbearbeitungsverfahren ein druckfähiges Bild entstanden ist, wird dieses in der Regel wieder komprimiert, um es von der Bildbearbeitung zu einem Ausgabegerät oder einem Speichermedium zu übermitteln. Nachteilig ist bei diesem Vorgehen, dass viel Rechenzeit und Rechenkapazität durch die sehr aufwendigen Dekomprimier- und Komprimiervorgänge verbraucht werden.

Deshalb wurden Bildbearbeitungsverfahren entwickelt, welche direkt auf den komprimierten Bilddaten durchführbar sind. Eines dieser Verfahren ist beispielsweise in "Edge enhancement of remote sensing image data in the DCT domain" Image and Vision Computing 17 (1999) 913-921, veröffentlicht. In dieser Schrift wird beschrieben, wie Kontrasterhöhung und Kantenverschärfung an Bilddaten vorgenommen werden können, welche in JPEG-Format vorliegen.

Unabhängig davon, ob derartige Bildbearbeitungsverfahren auf komprimierte oder bereits dekomprimierte Bilddaten angewandt werden, kann es, sobald die Anwendung der Bildbearbeitungsverfahren automatisch erfolgt, dazu kommen, dass der Eindruck des Bildes bei einigen Bildern durch die Bearbeitung insgesamt verschlechtert wird, selbst wenn das Bildbearbeitsverfahren an sich optimiert ist und sich bei der Mehrzahl der Bilder positiv auswirkt. Dies kann zu Reklamationen der Kunden führen und sollte deshalb vermieden werden.

Aufgabe der Erfindung war es deshalb, die Zuverlässigkeit und Effizienz herkömmlicher Bildbearbeitungsverfahren zu verbessern, so dass Bildverschlechterungen durch automatische Bildbearbeitung vermieden werden.

Gelöst wird diese Aufgabe gemäß der Erfindung durch ein Verfahren mit den Merkmalen von Anspruch 1.

Weitere Einzelheiten und Vorteile der Erfindung ergeben sich aus den Unteransprüchen im Zusammenhang mit der Beschreibung eines Ausführungsbeispieles, das anhand der Zeichnungen eingehend erläutert wird.

Erfindungsgemäß werden digitale, zu bearbeitende Bilddaten, welche in komprimierter Form vorliegen, vor der Bearbeitung analysiert, so dass aus diesem relativ geringen Datensatz mit wenig Aufwand an Rechenzeit und Rechenkapazität Informationen gewonnen werden, welche bei der folgenden Bildbearbeitung verwendet werden. Aus diesem durch Kompression reduzierten Datensatz lassen sich in sehr schneller, einfacher Weise Eigenschaften der Bilddaten, also des Gesamtbildes oder auch Eigenschaften lokaler Bildinhalte, ableiten, welche als Steuerdaten an die Bildbearbeitung übermittelt werden, so dass diese an die spezifischen Eigenschaften des zu erarbeitenden Bildes angepasst und auf diese Eigenschaften optimiert werden kann. Derartige Steuerdaten könnten theoretisch auch aus den dekomprimierten Bilddaten gewonnen werden, dies ist aber weitaus aufwändiger, da zur Bestimmung der Steuerdaten in diesem Fall ein weitaus gröβerer Datensatz betrachtet werden müsste und oftmals sehr zeitintensive Bearbeitungsschritte, wie beispielsweise eine Fouriertransformation, erforderlich wären, um Steuerdaten für die Bildbearbeitung zu gewinnen. Dies wäre enorm Rechenzeit aufwändig und damit für schnelle fotografische Kopiergeräte nicht realisierbar. Dagegen sind komprimierte Daten weniger umfangreich, Steuerdaten lassen sich auf jeden Fall schneller und einfacher aus diesem Datensatz gewinnen, als aus dem vollständigen Datensatz, so dass dieser Vorgang auch in automatischen, schnellen, fotografischen Kopiergeräten oder digitalen Printem mit vorgeschalteter Bildverarbeitung eingesetzt werden kann, ohne die gesamte Bildbearbeitung unnötig aufzuhalten.

Ein großer Vorteil, die komprimierten Bilddaten zur Ermittlung von Steuerdaten für die Bildverarbeitung zu verwenden, liegt also darin, dass im Rahmen der Kompressionsverfahren im Allgemeinen ohnehin Transformationen durchgeführt werden, welche sich bei der Ermittlung der Steuerdaten als außerordentlich vorteilhaft erweisen. Beispielsweise mit JPEG oder JPEG 2000 komprimierte Daten sind frequenztransformiert, so dass aus diesen die Steuerdaten ebenso einfach gewonnen werden können, wie das bei Dekompression der Daten erst nach einer sehr aufwändigen Fouriertransformation des kompletten Bilddatensatzes möglich wäre.

Eine besonders vorteilhafte Ausführungsform der Erfindung sieht vor, die aus komprimierten Daten gewonnenen Steuerdaten dazu zu verwenden, Bildverarbeitungsschritte innerhalb der gesamten Bildverarbeitung auszuwählen und damit die anzuwendende Bildverarbeitung für jedes Bild individuell zu gestalten. So werden bei einigen Bildern spezielle Bearbeitungsschritte, welche für diese vorteilhaft sind, erfolgen, während diese bei anderen Bildern mit Bildinhalt für den diese Bildverarbeitungsschritte sich nicht eignen, weggelassen werden. Dadurch kann Rechenzeit gespart werden, indem ungeeignete Bildverarbeitungsschritte übersprungen werden, insbesondere werden aber Bildverschlechterungen vermieden, welche durch die Anwendung für den Bitdinhalt ungeeigneter Bildverarbeitungsschritte bedingt sind. Es kann auch vorteilhaft sein, die Reihenfolge der Bildverarbeitungsschritte in Abhängigkeit der ermittelten Steuerdaten auszuwählen, da oftmals ein besseres Ergebnis erzielbar ist, wenn die Bildverarbeitungsschritte dem Bildinhalt entsprechend in anderer Reihenfolge vorgenommen werden. Insbesondere gibt es beispielsweise Bilder mit vorwiegend homogenen Flächen, welche durch Anwendung von Verschärfungsalgorithmen negativ verändert werden, die Bildverschärfung also besser nicht angewandt wird. Des Weiteren ist die Anwendung von Verschärfungsalgorithmen kritisch für Bilder, welche als Grafik am Computer generiert worden sind. Sobald anhand der komprimierten Bilddaten erkannt wird, dass es sich um ein äußerst homogenes Bild oder eine Computergrafik handelt, ist es vorteilhaft den Bildbearbeitungsschritt "Verschärfung" bei diesem Bild nicht anzuwenden, die Steuerung vermerkt, dass der Bildbearbeitungsschritt "Verschärfen" beim Bearbeiten der analysierten Bilddaten nicht durchgeführt werden soll.

Ein weiteres Beispiel für die Steuerung der Bildbearbeitung anhand der Analyse der komprimierten Bilddaten besteht darin, bereits aus dem komprimierten Bilddatensatz auf die Auflösung des Bildes zu schließen und anhand dieser mögliche Bildvergrößerungen festzulegen. Das heißt bei sehr niedriger Auflösung der Bilddaten werden Bildbearbeitungsschritte, welche eine Vergrößerung des Bildes über einen bestimmten Faktor hinaus, welche z.B. bei Ausschnittsvergrößerungen notwendig werden, nicht mehr zugelassen.

Eine weitere, vorteilhafte Ausführungsform sieht vor, die innerhalb der Bildbearbeitungsschritte zu verwendenden Parameter in Abhängigkeit von den, aus dem komprimierten Datensatz gewonnenen Steuerdaten, auszuwählen oder zu bestimmen. So können einzelne Bildbearbeitungsschritte bzw. Bildbearbeitungsverfahren, wie beispielsweise Verschärfung, Kontrastveränderung, Kornreduktion, Farbveränderungen oder sonstige bekannte anzuwendende Bildverarbeitungsverfahren individuell auf den Bildinhalt abgestimmt werden.

Jedes zu bearbeitende Bild wird also in komprimierter Form untersucht und die aus der Untersuchung resultierenden Steuerdaten werden verwendet, um eine für das Bild ideale Bildbearbeitung zu gestalten. Durch die Verwendung einer für jedes Bild individuellen Bildverarbeitung, wird vermieden, dass Bilder oder Bildbereiche negativ verfälscht werden, indem für diesen Bildinhalt ungeeignete oder mit diesen Parametem nicht geeignete Bildbearbeitungsverfahren angewandt werden. So kann jedes Bild durch die für den gezeigten Bildinhalt ideale Bildbearbeitung individuell, optimal gestaltet werden.

Um den Rechenzeitaufwand auch bei der Gewinnung der Steuerdaten so gering wie möglich zu halten, ist es besonders vorteilhaft, die Steuerdaten nur aus einem der, das Bild charakterisierenden, in der Regel drei, zur Verfügung stehenden, Farbkanäle zu gewinnen. Die komprimierten Bilddaten liegen im Allgemeinen bei der Bearbeitung fotografischer Daten in drei Kanälen vor. Die Bilddaten bestehen aus einem Datensatz für die Helligkeit, sowie zwei weiteren Farbkanälen, welche das Farbverhalten wiedergeben. Die Erfindung ließe sich aber genauso gut auf Daten anwenden, welche in einer anderen Farbraumdarstellung vorliegen. So könnten auch RGB-Daten, also Daten, bei denen jeweils ein roter, ein grüner und ein blauer Farbauszug vorliegen, erfindungsgemäß behandelt werden.

Arbeitet man jedoch mit Luminanz- und zwei Chrominanzsignalen, so kann man Steuerdaten für Bildverarbeitungsschritte oder Parameter gewinnen, welche sich aus den Helligkeiten oder Helligkeitskontrasten der Bilder herleiten lassen, aber auch Steuersignale, welche sich auf die Farbigkeit von Bildern oder bestimmten Bildinhalten, welche durch das Vorhandensein bestimmter Farben identifiziert werden, beziehen. Vielfach ist es jedoch ausreichend, das Luminanzsignal zu betrachten, um Daten zu gewinnen, welche eine effiziente Steuerung der Bildbearbeitung zulassen.

Vorteilhafter Weise werden die komprimierten Daten soweit dekomprimiert, bis das Frequenzspektrum der Bilddaten vorliegt, das heißt die Dekompression der Daten wird angehalten, bevor die Rücktransformation in den Ortsraum erfolgt. Nur der Komprimierungsschritt der Kodierung wird also rückgängig gemacht, so dass die transformierten, quantisierten Koeffizienten der Bilddaten, welche das Frequenzspektrum des Bildes widerspiegeln, verwendet werden können, um die Steuerdaten für die Bildverarbeitung zu gewinnen. Dieses Frequenzspektrum birgt im Wesentlichen alle Informationen, welche für eine Charakterisierung des Bildinhalts und damit eine geeignete Auswahl von Bildverarbeitungsschritten und Parametern für diese Bildverarbeitungsschritte notwendig sind.

Eine vorteilhafte Ausführungsform sieht vor, die transformierten, quantisierten Koeffizienten des Gesamtbildes eines Bilddatensatzes zu verwenden, um entsprechende Steuerdaten abzuleiten. Je nach dem, wie die Eigenschaften des Gesamtbildes sind, werden automatisch bestimmte Bildverarbeitungsschritte als sinnvoll erachtet und ausgeführt, während andere als zu einem negativen Ergebnis führend, verworfen werden. Auch mit welcher Intensität, bzw. mit welchen Parametern die einzelnen anzuwendenden Bildbearbeitungsschritte vorzunehmen sind, kann von Eigenschaften des Gesamtbildes abgeleitet werden.

In einer vorteilhaften Ausführungsform der Erfindung werden Steuerdaten für die Bildverarbeitung aus den transformierten, quantisierten Koeffizienten gewonnen, welche den tiefsten Frequenzen im Frequenzspektrum der Bilddaten entsprechen. Bei Bilddaten, welche mit JPEG komprimiert worden sind, handelt es sich hierbei um die sogenannten DC-Komponenten. Da die Bilddaten bei einer JPEG-Kompression in Blöcke von 8x8-Daten eingeteilt werden, entsprechen alle DC-Komponenten des Bildes einem um einen Faktor 8 in der Auflösung reduzierten Bilddatensatz. Bei JPEG 2000 wären das entsprechend die Niederfrequenzkomponenten aus der Wavelet-Transformation. Dies ist ein sehr effizient verringerter Datensatz, welcher aber im Wesentlichen alle Dichteinformationen des Bildes enthält. Dieser kann verwendet werden, um geeignete Belichtungsbedingungen für die Bildwiedergabe zu wählen. Ein Bildverarbeitungsverfahren hierzu ist beispielsweise in der DE 197 51 464 beschrieben. Hier werden dekomprimiert vorliegende, digitale Bilddaten über mehrere Bilder hin analysiert, um auf Eigenschaften zu schließen, welche die Bildaufnahmekamera hatte. Derartige für die Kamera charakteristische Eigenschaften, welche sich in den Bilddaten niederschlagen, können, sobald sie erfasst sind, bei der Bildwiedergabe berücksichtigt und gegebenenfalls korrigiert werden. Es ist jedoch sehr aufwändig, diesen vollständigen Datensatz, wie in der DE 197 51 464 beschrieben, über mehrere Bilder hin zu analysieren, da das Datenaufkommen doch sehr groß ist. Es wäre auch möglich, den Datensatz zu reduzieren, um mit dem reduzierten. Datensatz die Analyse für die Belichtungsbedingungen vorzunehmen. Dies ist aber wiederum ein zeitaufwändiger Rechenschritt, der zusätzlich zur Dekomprimierung erfolgen müsste. Entschieden vorteilhafter ist es dagegen, wie in der Erfindung vorgeschlagen, die niederfrequenten Komponenten der Bilder zum Generieren der Belichtungswerte zu betrachten, welche im komprimierten Datensatz vorliegen. Diese entsprechen von vornherein einem reduzierten Datensatz, welcher die Bilddichten in ausreichender Genauigkeit für dieses Analyseverfahren wiedergibt. Aufwändige Arbeitsschritte wie Dekompression und Umskalierung können vermieden werden.

In einer anderen vorteilhaften Ausführungsform werden Steuerdaten für die Bildbearbeitung aus den höher frequenten Komponenten der transformierten, quantisierten Koeffizienten der Bilddaten gewonnen. In JPEG beispielsweise handelt es sich hierbei um die AC-Komponenten. In diesen findet sich die eigentliche Frequenzinformation des Bildes. Sie können beispielsweise Aufschluss darüber geben, ob im Bild viel Detailinformation enthalten ist oder ob es sich um ein homogeneres Bild handelt oder auch, welcher Bildtyp vorliegt. Des Weiteren können diesen Komponenten Bildtendenzen entnommen werden, welche sich im Frequenzspektrum niederschlagen. So lässt sich anhand der AC-Komponenten ermitteln, ob ein Bild verwackelt wurde oder ob die Bilddaten, insbesondere der im Bild vorhandenen Detailinformation, eine Vorzugsrichtung zeigen. Sobald diese Ergebnisse aus der Analyse der höher frequenten Komponenten vorliegen, kann die Bildbearbeitung entsprechend gestaltet werden, um diesem spezifischen, analysierten Bildinhalt optimal entgegenzukommen.

Ein Bildbearbeitungsverfahren, welches sich besonders vorteilhaft anhand des Frequenzspektrums, bzw. der aus den komprimierten Bilddaten ermittelten Steuerdaten, optimieren lässt, ist die Bildverschärfung, also die Verstärkung der Detailinformation, welche im Allgemeinen durch Anhebung der Bildkanten erfolgt. So kann sich anhand der Analyse der komprimierten Bilddaten ergeben, dass eine Verschärfung bei dem vorliegenden Bild zu einer Verschlechterung des Bildeindrucks führen würde und somit der Bildbearbeitungsschritt Verschärfung bei diesem Bild überhaupt nicht vorgenommen werden sollte. Bei Bildern, welche durch Verschärfung positiv beeinflusst werden, kann die Bildbearbeitung anhand der Analyse der komprimierten Daten dahingehend optimiert werden, dass ideale Verschärfungsparameter gewählt werden.

Bilddaten, deren Matrix-Komponenten des zweidimensionalen Frequenzspektrums, welche extrem hohen Frequenzen zuzuordnen sind, nicht Null sind, können als Computergrafik identifiziert werden, da derart hohe Frequenzen in realen Bildern im Allgemeinen nicht bzw. nicht in dieser Häufigkeit auftreten. Bei diesen Bildern kann die Erfindung besonders vorteilhaft eingesetzt werden, da sie anhand der komprimierten Bilddaten besonders einfach identifiziert werden können und damit sowohl eine Bildverschärfung, als auch sonstige Korrekturen, welche sich auf Filmeigenschaften oder Ähnliches beziehen, übersprungen werden können. Bei einer Computergrafik ist davon auszugehen, dass sie vom Gestalter bereits optimal korrigiert wurde und somit am besten in der vorliegenden Form auszugeben ist, ohne Modifikationen daran vorzunehmen.

Falls alle Matrix-Komponenten der komprimierten Bilddaten, welche höheren Frequenzen zuzuordnen sind, höhere Werte aufweisen, ohne dass sich bei sehr hohen Frequenzen ein signifikanter Abfall zeigt, kann davon ausgegangen werden, dass es sich um Bilddaten handelt, welche, sei es in einem Computerprogramm oder in einer digitalen Kamera, bereits vorverschärft wurden. Bei derartigen Bildern ist es sinnvoll, die Bildverschärfung überhaupt nicht vorzunehmen oder aber die Parameter der Verschärfung sehr klein zu wählen, so dass beim bearbeiteten Bild keine Artefakte durch eine übermäßige Verschärfung auftreten können.

Auch wenn die Analyse der komprimierten Bilddaten ergibt, dass es sich um ein reguläres Bild handelt, welches durch Bildverschärfung verbessert werden kann, kann das erfindungsgemäße Verfahren vorteilhaft verwendet werden. Zeigt beispielsweise die Analyse der Komponenten der komprimierten Bilddaten, dass im Bild vorwiegend tiefe Frequenzen zu finden sind, so kann davon ausgegangen werden, dass es sich um einen sehr homogenen Bildinhalt handelt, bei welchem durch sehr starke Verschärfung allenfalls die Körnigkeit oder das Rauschen des Bildes verstärkt, der Bildinhalt an sich aber nicht positiv beeinflusst würde. In diesem Fall werden erfindungsgemäß die Steuerdaten so gewählt, dass kleine Verschärfungsparameter verwendet werden. Im umgekehrten Fall, in dem bei einem als natürliche Aufnahme erkannten Bild viele Komponenten des komprimierten Datensatzes vorliegen, welche hohen Frequenzen zuzuordnen sind, ist es dagegen angebracht, die Steuerdaten so zu wählen, dass eine starke Verschärfung vorgenommen wird. Bei derartigen Bildern kann davon ausgegangen werden, dass der Bildinhalt viele Details zeigt, bei denen die Verschärfung eine optimale Wirkung erzielen kann, indem diese Detailinformation deutlicher hervorgehoben wird.

Sobald der Wert der Matrix-Komponenten der komprimierten Bilddaten in eine Richtung deutlich größer ist, als in eine andere (z.B. in x-Richtung größer als in y-Richtung), kann davon ausgegangen werden, dass die Kanten der Detailinformation vorwiegend entlang einer bestimmten Vorzugsrichtung verlaufen. Hierbei könnte es sich beispielsweise um die Aufnahme von Gräsern handeln, welche im Wind in eine Richtung geneigt sind. Hier wäre es vorteilhaft, die Verschärfungsparameter so zu wählen, dass die Verschärfung insbesondere senkrecht zum Verlauf der Kanten vorgenommen wird, um das Detail gut hervorzuheben, ohne dabei Anderes zu verfälschen. So kann vorteilhaft durch die Erfindung eine individuell gerichtete Verschärfung gewählt werden, indem anhand des zweidimensionalen Frequenzspektrums der komprimierten Bilddaten ein Frequenzgang ermittelt und diese Information in Steuerdaten für die Verschärfung umgesetzt wird.

Zeigen die gesamten Bilddaten eines Bildes in komprimierter Form eine Vorzugsrichtung, obwohl im Bild willkürlich verteilte, höhere und tiefere Frequenzen vorkommen, so kann gefolgert werden, dass es sich um eine verwackelte Aufnahme handelt. Dabei sprechen die vorhandenen, unterschiedlichen Frequenzen dafür, dass es sich um keinen einheitlichen Bildinhalt handelt, welcher in einer Vorzugsrichtung angeordnet sein kann, sondern die Vorzugsrichtung durch die Aufnahme bedingt ist. In diesem Fall kann in gewissem Rahmen eine Korrektur des Bildfehlers erfolgen, indem die hohen Frequenzen in Verwacklungsrichtung, also in Richtung der Vorzugsrichtung, angehoben werden. Realisierbar ist dies durch die Anwendung von Filtern, wie sie beispielsweise bei der Bildverschärfung eingesetzt werden.

Ein weiteres vorteilhaftes Einsatzgebiet der Erfindung ist die Rausch- bzw. Kornunterdrückung, die im Allgemeinen bei der Bildbearbeitung durchgeführt wird. Die Körnigkeit eines Bildes erscheint insbesondere dann störend, wenn das Bild große Bereiche sehr homogener Flächen, wie beispielsweise viel Himmel, aufweist. In diesem Fall sollte eine starke Rausch- oder Kornunterdrückung erfolgen, um das Bild optimal zu gestalten. Befinden sich dagegen vorwiegend kleinere Details im Bild, so kann durch eine zu stark gewählte Rauschunterdrückung Detailinformation verloren gehen, obwohl das Rauschen bei diesem Bildinhalt in der Wiedergabe des Bildes keineswegs störend gewesen wäre. Erfindungsgemäß kann anhand der komprimierten Bilddaten festgestellt werden, ob die Bilddaten aus vorwiegend hohen oder tiefen Frequenzen bestehen, so dass auf einen mehr oder weniger homogenen Bildinhalt geschlossen werden kann. Zeigen die komprimierten Bilddaten, dass das Bild vorwiegend tief frequente Anteile zeigt, so werden die Steuerdaten derart gewählt, dass eine starke Rausch- oder Komunterdrückung bei der Bildbearbeitung erfolgt.

Ein weiterer vorteilhafter Anwendungsfall, bei dem die Erfindung optimal eingesetzt werden kann, ist die maximal zu wählende Bildvergrößerung. Anhand der komprimierten Bilddaten lässt sich ermitteln, welche maximale Frequenz im Datensatz auftritt. Daraus kann näherungsweise auf die Auflösung des Bildes geschlossen werden. Ist diese Auflösung bekannt, so kann abgeleitet werden, um welchen Faktor die Aufnahme maximal vergrößert werden kann. Die Vergrößerung kann solange erhöht werden, bis sich ein Bildeindruck ergibt, der einzelne Punkte oder Stufen störend wiedergibt, bis also die Vergrößerung bei der vorliegenden Auflösung zu stark war. Aus der aus den komprimierten Daten abgeleiteten Abbruchfrequenz sind also Steuerdaten ermittelbar, welche verhindern, dass ein zu großer Vergrößerungsmaßstab an die Bilddaten angelegt wird. Im Rahmen der Bildverarbeitung kann dann beispielsweise eine Warnung ausgegeben werden, welche den Betreiber des Gerätes darauf hinweist, dass der gewählte Vergrößerungsfaktor für die Auflösung der vorliegenden Bilddaten unpassend ist, da sich bei Anwendung dieser Vergrößerung ein unbefriedigendes Bildergebnis ergeben würde. Insbesondere kann anhand der komprimierten Bilddaten die Detailauflösung ermittelt werden. Aus dieser kann abgeleitet werden, wie stark ein Bild verkleinert werden kann, ohne dass Detailinformationen im Bild vollständig verloren gehen. Dies kann z.B. genutzt werden, um eine optimale Bildgröße für Indexprints zu wählen. Dabei wird die Größe der auf dem Indexprint abgebildeten Einzelbilder so gewählt, dass möglichst wenige Bilddetails verloren gehen aber eine passable Anzahl von Bildern auf den Indexprint passt.

Eine weitere vorteilhafte Anwendung des erfindungsgemäßen Verfahrens besteht darin, aus dem Verhältnis sehr hochfrequenter Anteile des komprimierten Datensatzes zu den Komponenten des komprimierten Datensatzes welche den tiefsten Frequenzen entsprechen auf das Gamma der Kamera, mit der das Bild aufgenommen wurde, zu schließen und aus diesem Steuerdaten für das bei der Bildwiedergabe zu verwendende Gamma zu ermitteln. Der Gammawert gibt an, wie steil die Gradationskurve des Aufnahmematerials bzw. - mediums ist, wie schnell also die Dichte, der Schwärzungsgrad der Bilddaten mit zunehmender Helligkeit während der Aufnahme anwächst. Ist die Gradationskurve beispielsweise sehr steil, so ist das Gamma sehr groß und damit der Belichtungsumfang sehr klein, da bereits bei einer relativ geringen Helligkeitszunahme die maximal zu erzielende Dichte erreicht ist. In so einem Fall, in dem das Aufnahmemedium ein großes Gamma, also eine steile Gradationskurve aufweist, ist es vorteilhaft, in der Bildbearbeitung die Bilddaten vor der Wiedergabe mit einem flacheren Gamma zu beaufschlagen. Dadurch entsteht ein weicherer Bildeindruck, der dem vom Auge wahrgenommenen Dichteverlauf besser entspricht. Um das Gamma für die Bildwiedergabe optimal steuern zu können, werden also Verhältnisse aus hochfrequenten und tieffrequenten Anteilen des komprimierten Bilddatensatzes (AC/DC-Komponenten bei JPEG) gebildet und mit dem Verhältnis eines mit einem Gammawert von 1 aufgenommen Bildes verglichen. Deutet das Verhältnis auf einen größeren Gammawert bei der Bildaufnahme hin, so wird die Bildbearbeitung veranlasst, die Bilddaten mit einem flacheren Gamma zu modifizieren und umgekehrt. So können bereits anhand der komprimierten Bilddaten die Steuergrößen für eine optimale Gestaltung der Gradation der bearbeiteten Bilddaten bestimmt werden.

Eine weitere, besonders vorteilhafte Anwendung der Erfindung besteht darin, Steuerdaten für lokale Veränderungen der Bilddaten aus den transformierten, quantifizierten Koeffizienten einzelner Blöcke der komprimierten Bilddaten zu gewinnen. Je nach Komprimieralgorithmus sind die Blöcke bestimmten Bildbereichen zugeordnet und können beliebige Form und Größe annehmen. Die Blöcke im komprimierten Bilddatensatz lassen sich bestimmten Positionen dieser Bilddaten im Bildinhalt der Aufnahme zuordnen. Durch eine Analyse einzelner oder einer Gruppe von benachbarten Blöcken der komprimierten Bilddaten kann abgeleitet werden, welche Aufnahmebedingungen oder inhaltliche Charakteristika die Bilddaten an einer bestimmten Bildposition zeigen.

Aus diesen Informationen können dann lokale Steuerdaten für die Bildbearbeitung festgelegter Bereiche im Bild gewonnen werden, welche denen entsprechen, die für die Bildbearbeitung des Gesamtbildes aus allen komprimierten Daten des Bildes abgeleitet werden, wie in den vorhergehenden Abschnitten beschrieben wurde. Das Vorgehen bei der Ermittlung der Steuerdaten ist analog dem für das Gesamtbild, der Unterschied besteht nur darin, dass nur ein oder wenige Blöcke ausgewertet werden und die Steuerdaten jeweils dann nur auf die entsprechenden ausgewerteten Bildbereiche angewandt werden. Auf diese Weise kann dann auch wieder das gesamte Bild bearbeitet werden, allerdings nicht mit einer einheitlichen Steuerung pro Bild und Bildbearbeitungschritt, sondern mit Steuerdaten, die auch innerhalb eines Bildbearbeitungsschrittes lokal für verschiedene Bildbereiche unterschiedlich ausfallen können.

So werden beispielsweise in Bildbereichen in denen viel Detailinformation enthalten ist die hochfrequenten Anteile der entsprechenden Blöcke stärker besetzt sein als in homogenen Bereichen. Entsprechend werden in den Bildbereichen die den Blöcken mit stark hochfrequenten Anteilen zugehörig sind vorteilhafterweise andere Verschärfungsparameter gewählt als in den homogeneren Bereichen. So kann eine, optimal auf den lokalen Bildinhalt angepasste, Bildbearbeitung realisiert werden.

In einer besonders vorteilhaften Ausführungsform werden Steuerdaten für die Wahl von, zur Bildbearbeitung an bestimmten Bildpositionen eingesetzten, Filtern und/oder Kennlinien aus den Werten von Komponenten ausgewählter Frequenzen der zugehörigen Blöcke abgeleitet.

Ein besonders vorteilhaftes Einsatzgebiet für die Erfindung ist die Kontrastmodifikation. Um dabei verursachte Bildfehler (Haloerscheinungen an Stellen starker Hell-/Dunkelübergange) zu vermeiden kann anstelle des in der DE 197 03 063 beschrieben Verfahrens das erfindungsgemäße Verfahren vorteilhaft eingesetzt werden. So werden bei der Kontrastmodifikation in Bildbereichen in denen viele hohe Frequenzen auftreten, andere Filter zur Bildung der unscharfen Masken, welche für Kontrastmodifikationen der Bilddaten eingesetzt werden, verwendet als in solchen Bereichen, in denen vor allem tiefe Frequenzen vorherrschen. Da das Auftreten einer Vielzahl hoher Frequenzen in einem Block für viel Detailinformation an der entsprechenden Stelle des Bildes steht, ist anzunehmen, dass in diesem Bildbereich auch viele Dichtesprünge zu beobachten sein werden. In diesen Bereichen kommt es in herkömmlichen Bildbearbeitungsverfahren beispielsweise zu hellen Streifen in dunklen Bildbereichen, welche an sehr helle Bildbereiche grenzen oder umgekehrt. Um diese, im Allgemeinen durch Überschwingen verursachten Bildfehler zu vermeiden werden in Bereich starker Dichtesprünge geeignetere Filter zur Maskenbildung verwendet. Dies wird in Zusammenhang mit den Ausführungsbeispielen näher erläutert.

Auch bei der Wahl der Steuerparameter für die Kontrastmodifikation lassen sich die komprimierten Bilddaten vorteilhaft verwenden. In diesem Datensatz ist der Kontrastumfang in jedem Frequenzband direkt ersichtlich. Damit kann unmittelbar abgeleitet werden, wie stark der Kontrast in einem bestimmten Frequenzband modifiziert werden muss, so dass sich bei der Bildwiedergabe ein optimal an das Wiedergabemedium angepasster Kontrastumfang ergibt.

Prinzipiell ist es vorteilhaft, zur Bestimmung der Steuerparameter für das Kontrastmanagement, eine Frequenzanalyse vorzunehmen. Hierzu werden bereits in Frequenzform vorliegende komprimierte Bilddaten verwendet oder dekomprimierte Bilddaten frequenztransformiert. Die dabei erhältlichen Frequenzdaten werden dann in verschiedene Frequenzkomponenten aufgespalten. Die Komponenten werden analysiert und daraus werden Steuerparameter für ein sehr detailliertes Kontrastmanagement ermittelt. Der Kontrast kann so präzise auf Idealwerte im Detailkontrast und Flächenkontrast abgestimmt werden.

Auch die Wahl der Verschärfungsparameter kann sehr vorteilhaft lokal erfolgen. So wird vorzugsweise in Bildbereichen, die im komprimierten Datensatz Blöcken mit vielen hohen Frequenzen entsprechen, also in detailreicheren Gebieten, stärker verschärft als in niederfrequenteren, also homogeneren Bildbereichen.

Auch bei Bildbearbeitungen die der Optimierung der Bildfarben dienen kann die Erfindung besonders vorteilhaft eingesetzt werden. So kann beispielsweise die Farbsättigung in Bildbereichen mit vielen Bilddetails viel stärker gewählt werden als in homogenen Farbflächen. Stark gesättigte Farben in Bildbereichen mit vielen kleinen Detail und vielen Farb- und Dichtesprüngen ergeben den Eindruck eines schön farbigen, brillanten Bildes, wohingegen starke Farbsättigungen in farbhomogenen Flächen zu künstlichen, übersättigten Eindrücken führen können. Deshalb werden erfindungsgemäß Bildbereiche, die zu Blöcken mit vielen hohen Frequenzen gehören stärker gesättigt als solche, die Blöcken mit vorwiegend tiefen Frequenzen zugeordnet wird. So können die Bildfarben lokal optimiert werden.

Besonders vorteilhaft lassen sich aus dem Verhältnis der hochfrequenten Komponenten eines oder mehrerer benachbarter Blöcke der komprimierten Bilddaten zu den zugehörigen niederfrequentesten Komponenten dieser Daten die Steuerdaten zur Wahl von Kennlinien und/oder Filtern, welche im Rahmen der Bildbearbeitung auf die zugehörigen Bildbereiche angewandt werden sollen, ermitteln. Dieses Verhältnis ist ein Maß für die Anzahl der Bildkanten oder Dichtesprünge in Bezug auf die absolute Bilddichte am jeweiligen Bildort und spezifiziert die alleinige Frequenzinformation. Indem beispielsweise die Verschärfungsparameter in Abhängigkeit dieses Verhältnisses gewählt werden, kann vermieden werden, dass sehr dunkle homogenere Bereiche durch zu starke Verschärfung verrauscht erscheinen, was relativ einfach geschieht, wenn sich in diesen viel Detailinformation, also beispielsweise starke Körnigkeit zeigt.

Eine weitere vorteilhafte Ausführungsform der Erfindung besteht darin Filter und/oder Kennlinien in Abhängigkeit von Vorzugsrichtungen hochfrequenter Komponenten innerhalb von Blöcken auszuwählen. Steuerdaten für die Bildbearbeitung werden so gewählt, dass beispielsweise beim Auftreten einer Vorzugsrichtung (die auf eine gerichtete Detailinformation wie bspw. ein Kornfeld hindeutet) innerhalb der Komponenten eines Blockes die Verschärfung der zugehörigen Bilddaten vorzugsweise senkrecht zur Ausrichtung der Detailinformation erfolgt, um eine effiziente Verschärfung zu ermöglichen.

In einem weiteren vorteilhaften Verfahren werden die komprimierten Daten der Chrominanzbilder, also eines Farbwertes verwendet, um Motive zu erkennen. Befinden sich beispielsweise in den Blöcken eines Bildbereiches zahlreiche hochfrequente Komponenten im grünen, komprimierten Bilddatensatz, so kann mit einer gewissen Wiese geschlossen werden. Findet man dagegen ausschließlich tieffrequente, hochwertige Komponenten im blauen Bilddatensatz, so handelt es sich wohl um die Aufnahme eines Himmels. Diese Hinweise auf das Wahrscheinlichkeit auf die Aufnahme einer Vorliegen bestimmter Motive können untereinander und mit anderen Untersuchungen kombiniert werden, so dass manche Motive zweifelsfrei zu erkennen sind. Sind bestimmt Motive in einem Bilddatensatz erkannt worden, so kann die Steuerung der Bildbearbeitung individuell an diese Bildmotive angepasst werden. So kann man bspw. versuchen den Horizont aufzurichten, sobald der Himmel und damit sein Übergang zu Land oder Meer bekannt ist, da ein häufiger Fehler von Amateurfotografen darin besteht, die Kamera bei der Aufnahme schräg zu halten, was den Eindruck von auslaufenden Meeren oder Seen bewirken kann.
Weitere Merkmale und Vorteile der Erfindung ergeben sich aus der folgenden Beschreibung bevorzugter Ausführungsformen und Anwendungsbeispiele, wobei Bezug auf die beigefügten Zeichnungen genommen wird.

Es zeigen:
- Fig. 1: ein Ablaufdiagramm eines erfindungsgemäßen automatischen Bildbearbeitungsverfahrens,
- Fig. 2: ein Schema zur Erläuterung des Dekodierens des Bilddatensatzes und
- Fig. 3 und 4: Diagramme zur Veranschaulichung einer erfindungsgemäßen vorgenommenen Kontrastmodifikation.

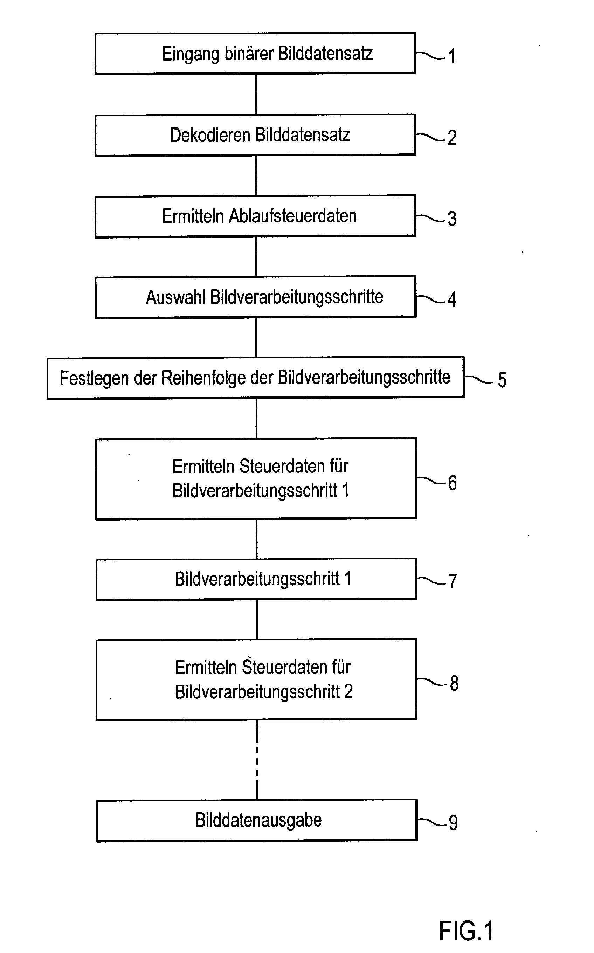

Fig. 1 gibt einen Überblick über den Ablauf eines Verfahrens zur automatischen Bearbeitung digitaler Bilddaten, bei dem die Erfindung realisiert ist. Die zu bearbeitenden Bilddaten gehen in Schritt 1 in binärer Form ein. In Schritt 2 werden diese eingegangenen Bilddaten dekodiert.

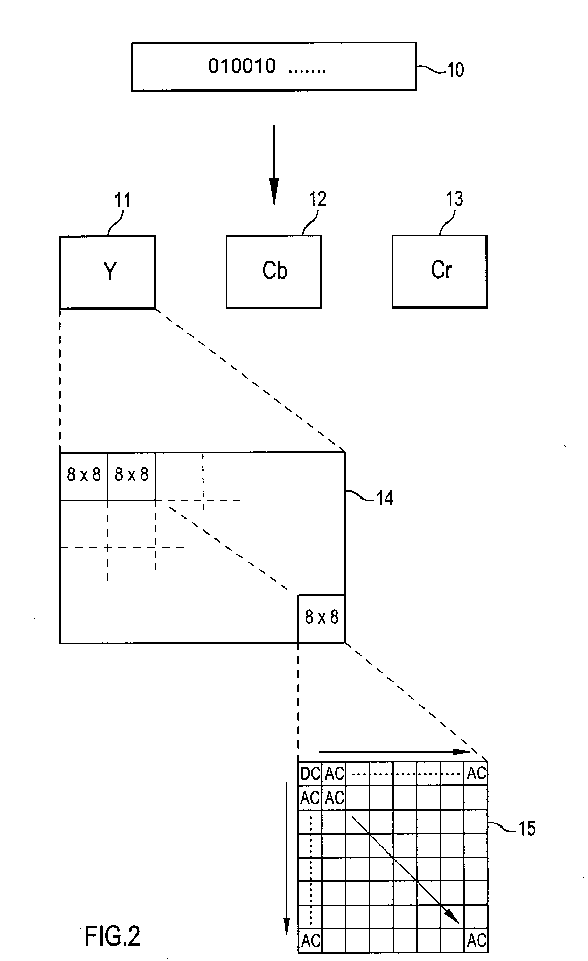

Das Dekodieren ist in Fig. 2 schematisch dargestellt, am Beispiel von, mit JPEG komprimierten, Bilddaten. Der eingegebene Bitstrom, ein eindimensionaler Vektor, wird im Rahmen des Dekodierverfahrens, in eine zweidimensionale Matrix, mit unterschiedlichen Werten, zurückverwandelt. Genaugenommen liegen nach dem Dekodieren drei Matrizen, eine Y-Komponente 11 für die Helligkeit, eine Cb-Komponente 12 für eine Farbe und eine Cr-Komponente 13 für eine weitere Farbe, vor. Derartige Dekodierverfahren sind Stand der Technik und können als freie Software bezogen werden. Jede der Matrizen ist, wie für die Y-Komponente 11, in 14 schematisch dargestellt, in Werteblöcke des Formats 8x8 aufgeteilt. Die Lage dieser Blöcke innerhalb der Matrix entspricht der Position der zugehörigen Bilddaten im Ausgangsbild. Jeder dieser 8x8-Blöcke hat die in 15 schematisch dargestellte Form. Jeder Block weist eine DC-Komponente auf, die mit dem Blockmittelwert besetzt ist und sich links oben befindet. Diese Komponente gibt Aufschluss über die Bilddichte im Bereich des 8x8-Blockes. Die weiteren Matrizenwerte, die AC-Komponenten, sind Frequenzwerte, wobei sich die AC-Komponenten der tieferen Frequenzen in der Nähe der DC-Komponente befinden, die AC-Komponenten sehr hoher Frequenzen am Blockrand, die Frequenz nimmt also in Pfeilrichtung zu. Befinden sich also beispielsweise im rechten unteren Quadranten der Matrix nur Nullen, so heißt das, dass im Bild keine Bilddetails mit sehr kleiner Ausdehnung in X- und Y-Richtung auftreten. Sind nur die AC-Komponenten in direkter Umgebung der DC-Komponente mit Werten ungleich Null besetzt, so treten im Bild ausschließlich Inhalte mit sehr tiefen Frequenzbildern auf, das Bild weist also, an der dem Block zugeordneten Stelle, einen sehr homogenen Bildinhalt, wie z. B. eine einfarbige Fläche, auf. Häufen sich hohe Werte der AC-Komponenten am linken unteren Ende an, so ist davon auszugehen, dass das Bild an der entsprechenden Stelle detailreiche, entlang einer Richtung ausgedehnte Bildinformation, wie beispielsweise Gräser eines Kornfeldes, aufweist.
Die nach der Dekodierung gewonnenen Blöcke repräsentieren also das lokale Frequenzspektrum an der entsprechenden Bildposition. Aus ihnen können charakteristische Eigenschaften des Bildinhalts abgeleitet werden. So können aus dem dekodierten Bilddatensatz, wie in Fig. 1 mit Schritt 3 angedeutet, Steuerdaten für den Ablauf des Bildverarbeitungsverfahrens gewonnen werden. Sind beispielsweise keine hochfrequenten Anteile in den Frequenzspektren des Bildes zu finden, d. h. für JPEG die äußeren AC-Komponenten in den 8x8-Blöcken haben alle den Wert Null, so kann davon ausgegangen werden, dass das Bild wenig Detailinformation enthält, also sehr homogen ist. In diesem Fall würden die Ablaufsteuerdaten gewährleisten, dass bei der Auswahl der Bildverarbeitungsschritte in Schritt 4 und dem Festlegen der Reihenfolge dieser in Schrittt 5 die Korn- und Rauschunterdrückung priorisiert, während beispielsweise Bildverschärfung für dieses Bild als Bildverabeitungsschritt überhaupt nicht vorgesehen wird.

Sobald die anzuwendenden Bildverarbeitungsschritte ausgewählt und ihre Reihenfolge festgelegt ist, werden diese Bildverarbeitungsschritte nacheinander oder, um Rechenzeit zu sparen, teilweise parallel abgearbeitet. Dazu werden für einzelne Bildverarbeitungsschritte in Schritt 6 Steuerdaten aus dem komprimierten Bilddatensatz ermittelt. Eine Möglichkeit ist es hierbei, das Gesamtbild zur Gewinnung der Steuerdaten heranzuziehen. So kann beispielsweise die Stärke der Rauschoder Kornunterdrückung festgelegt werden, indem der durchschnittliche Anteil höherer Frequenzen im Gesamtbild zu Grunde gelegt wird. Weist das Bild beispielsweise ausschließlich sehr tiefe Frequenzen auf, so kann die Rausch- oder Kornunterdrückung stärker eingestellt werden als wenn beispielsweise im mittleren Frequenzbereich noch viele hohe Werte zu finden sind.

Eine weitere Möglichkeit der Steuerung zur Optimierung eines Bildverarbeitungsschrittes besteht darin, die Steuerparameter vor diesem Bildverarbeitungsschritt lokal unterschiedlich für verschiedene Bildpositionen zu wählen, an denen unterschiedliche Bedingungen herrschen. Oftmals ist es nämlich so, dass ein Bild nicht vorwiegend tiefe oder hohe Frequenzen aufweist, sondern abhängig vom Bildinhalt bestimmte Gebiete im Bild von hohen Frequenzen dominiert werden, während andere Gebiete vorwiegend tiefe Frequenzen aufweisen. So kann beispielsweise eine Landschaftsaufnahme mit blauem Himmel aus sehr tiefen Frequenzen im oberen Bildbereich aber sehr hohen Frequenzen im unteren Bildbereich bestehen. In so einem Fall ist es optimal die Rausch- oder Kornunterdrückung im oberen, tieffrequenten Bildbereich sehr stark einzustellen, wohingegen die Rauschoder Kornunterdrückung im unteren, sehr detailreichen Bildbereich nur sehr vorsichtig angewandt werden darf, so dass eine Verunschärfung oder Verminderung der Detailinformation vermieden wird. In einem solchen Fall werden die Steuerdaten für die Bildverarbeitung blockweise unterschiedlich gebildet, so dass jeder Block und damit jeder kleinere, zugeordnete Bildabschnitt eine auf seine Bedingungen optimierte Bildverarbeitung zugeordnet bekommt.

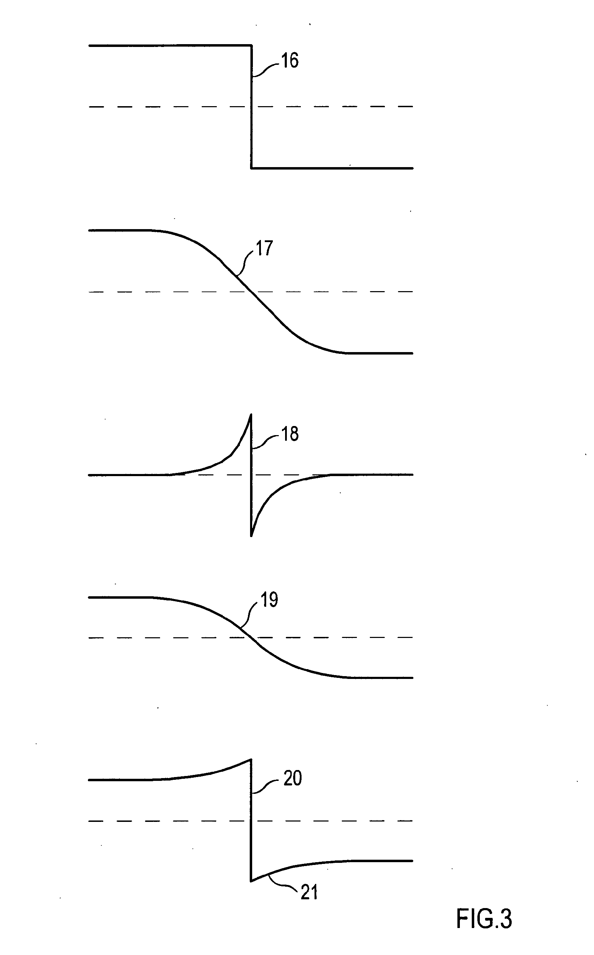

Die lokale Wahl von Steuerdaten für unterschiedliche Bildpositionen ist insbesondere dann notwendig, wenn eine über das ganze Bild identisch gewählte Bildverarbeitung zu fehlerhaften Ergebnissen führt. Dies kann beispielsweise bei der Kontrastreduktion der Fall sein. Zur Veranschaulichung dieser Problematik ist der Ablauf eines Verfahrens zum Kontrastausgleich schematisch in Fig. 3 dargestellt. Kontrastmodifikation wird eingesetzt, um Dichtesprünge 16 im Dichteprofil des Bildinhalts zu reduzieren. Dadurch soll vermieden werden, dass zu starke Dichtesprünge, welche z. B. bei Schlagschatten, in aufgenommenen Gesichtern auftreten, sich negativ auf dem Bildeindruck auswirken. Um den Kontrast auszugleichen, wird der Tiefpass 17 der Bilddaten gebildet. Dieser Tiefpass wird vom Original 16 subtrahiert, so dass als Ergebnis der Hochpassanteil 18 übrigbleibt. Um einen Kontrastausgleich der Bilddaten vorzunehmen, wird nun der Tiefpassanteil reduziert, indem er mit einem Faktor kleiner 1 multipliziert wird. So erhält man den reduzierten Tiefpass 19, indem man beispielsweise den Tiefpass mit 2/3 multipliziert. Als letzter Schritt des Verfahrens zur Kontrastmodifikation wird nun der reduzierte Tiefpass 19 mit dem Hochpasssignal 18 addiert, um somit ein Bildsignal zu kreieren, bei dem die Detailinformation identisch erhalten bleibt, der Großflächenkontrast, der sich beispielsweise bei Schlagschatten negativ bemerkbar macht aber verringert ist. Die kontrastreduzierte Funktion ist in 20 dargestellt. Obwohl es im Allgemeinen wünschenswert ist, die Detailinformation durch Addition des originalen Hochpasssignals 18 zu erhalten, kommt es, wie in diesem Beispiel dargestellt, an Dichtestufen im Bild zu sogenannten Überschwingern 21. Diese Überschwinger machen sich im Bild als störende Halos bemerkbar, ihr Einfluss ist v. a. deshalb so störend, da sie bis weit in die homogenen Bildbereiche hin sichtbar sind.

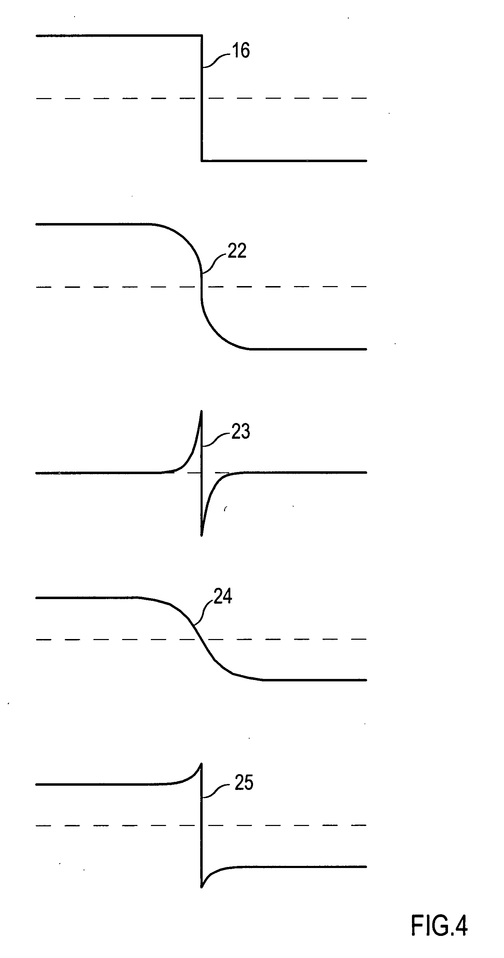

Durch die Wahl lokal unterschiedlicher Tiefpassfilter können sie vermieden werden. So werden erfindungsgemäß bei der Tiefpassbildung an Kanten im Dichteprofil, also im Bereich hoher Frequenzen im komprimierten Datensatz die Filterfrequenzen der Tiefpassfilter hochgesetzt, während weiter entfernt von den Kanten, also in Bereichen homogenen Bildinhalts die Filterfrequenzen des Tiefpassfilters tief belassen werden. Bei diesem erfindungsgemäßen Vorgehen ergibt sich ein lokal optimierter Tiefpass 22, der beispielhaft in Fig. 4 dargestellt ist. Zieht man diesen Tiefpass nun von den Originaldaten 16 ab, so ergibt sich ein Hochpasssignal 23, dessen Abfall auf den direkten Umgebungsbereich der Kante reduziert ist. Das reduzierte Tiefpasssignal, das sich bei diesem Vorgehen ergibt, ist in Fig. 4 mit 24 bezeichnet. Dieses reduzierte Tiefpasssignal wird nunmehr analog Fig. 3 zum Hochpasssignal 23 addiert, so dass sich das im Kontrast reduzierte, bearbeitete Ergebnis 25 ergibt. Diese Bilddaten, welche sich bei einem Kontrastmodifikationssignal ableiten lassen, bei dem die Filter lokal in Abhängigkeit der aus den analysierten, komprimierten Bilddaten abgeleiteten Steuerdaten gewählt werden, zeigt weitaus weniger auffällige Haloerscheinungen. Die Überschwinger sind auf ganz kleine Randbereiche entlang der Kante reduziert und damit im Bildergebnis kaum sichtbar. Durch eine derartige lokale Wahl der Filter, welche aufgrund der Auswertung des komprimierten Bilddatensatzes erfolgt, können also im Bildverarbeitungsschritt Kontrastmodifikation Defizite der gängigen Verfahren ausgeglichen werden.

Im Rahmen des Bildverarbeitungsverfahrens werden auf diese Art und Weise alle vorgesehenen Bildverarbeitungsschritte erfindungsgemäß ergänzt, indem vor Anwenden des jeweiligen Bildverarbeitungsschrittes Steuerdaten für diesen Schritt aus einer Analyse des komprimierten Bilddatensatzes ermittelt werden. So können durch die gewonnenen Steuerdaten die Bildverarbeitungsschritte zum einen optimal ausgewählt werden, zum anderen aber auch auf das Gesamtbild und lokale Bildinhalte die optimalen Bildverarbeitungsparameter angepasst werden. Dadurch kann die Bildverarbeitung dem jeweiligen Bild und Bildinhalt optimal gerecht werden, Bildverschlechterungen und Bildverarbeitungsfehler können auf diese Weise weitgehenst eliminiert werden. Müssen die Daten für die Bilddatenausgabe (Schritt 9) schneller zur Verfügung stehen, so kann ein Vorgehen gewählt werden, bei dem nur bei den für diese Bilddaten als wesentlich erkannten Bildverarbeitungsschritte Steuerdaten ermittelt werden, wohingegen die im Folgenden noch durchzuführenden weiteren Bildverarbeitungsschritte nach dem herkömmlichen Verfahren mit Standardparametern realisiert werden.

Das beschriebene Verfahren lässt sich selbstverständlich ebenso wie auf die Helligkeitskomponente 11 auf die Farbkomponenten 12 und 13 anwenden. Steuerdaten können aber auch aus einer Kombination der Analyse der komprimierten Daten für den Helligkeitswert mit einer Analyse der komprimierten Daten der Farbkomponenten gewonnen werden. Besonders bei der Motiverkennung, welche für die individuelle Steuerung von Bildverarbeitungsschritten ganz besonders vorteilhaft ist, ist es wünschenswert sowohl Erkenntnisse aus der Untersuchung der Bilddichten, als auch Erkenntnisse aus der im Bild vorhandenen Farbinformation einfließen zu lassen. Obwohl das Ausführungsbeispiel insbesondere im Verfahrensschritt des Dekodierens auf JPEG beschränkt wurde, ist die Erfindung nicht auf dieses Komprimierverfahren eingeschränkt. Sie ist auf jeden zu bearbeitenden Bilddatensatz anwendbar, der in komprimierter Form frequenztransformiert vorliegt, da der wesentliche Vorteil in der Nutzung des im komprimierten Datensatz schon zur Verfügung stehenden Frequenzspektrums zur Steuerung der Bildverarbeitung liegt. So werden beispielsweise auch in JPEG 2000 Blöcke gebildet, welche Komponenten aufweisen, die bestimmten Frequenzen zugeordnet sind. Vereinfacht dargestellt gibt es hier einen Block mit "DC"-Komponenten und mehrere mit "AC"-Komponenten mit wachsender Frequenz und Größe. Die Komponenten innerhalb der Blöcke sind bestimmten Bildpositionen zuordenbar, von deren Bildwerten sie abgebildet wurden. Somit ist auch hier eine Zuordnung der komprimierten Daten zu Frequenz und Bildpositionen möglich. Für die Erfindung ist es auch unwesentlich, ob die Bildverarbeitungsschritte auf die noch komprimierten Bilddaten angewandt werden oder ob die Bilddaten vor der Bearbeitung dekomprimiert und vor der Ausgabe in Schritt 9 wieder komprimiert werden.

## Patentansprüche

1. Verfahren zur automatischen Bearbeitung digitaler Bilddaten, wobei die Eingabebilddaten in komprimierter Form vorliegen und wobei mehrere Bildbearbeitungsschritte auf die komprimierten oder vor der Bearbeitung dekomprimierten Bilddaten angewandt werden, **dadurch gekennzeichnet, dass** die Bildbearbeitungsschritte anhand von Steuerdaten automatisch gesteuert werden, welche aus den komprimierten Bilddaten gewonnen werden.

2. Verfahren nach Anspruch 1, **dadurch gekennzeichnet, dass** anzuwendende Bildbearbeitungsschritte in Abhängigkeit von den gewonnenen Steuerdaten ausgewählt werden.

3. Verfahren nach Anspruch 1, **dadurch gekennzeichnet, dass** Bildbearbeitungsparameter für die Bildbearbeitungsschritte in Abhängigkeit von den gewonnenen Steuerdaten ausgewählt werden.

4. Verfahren nach einem der vorhergehenden Ansprüche, **dadurch gekennzeichnet, dass** die Steuerdaten aus einem der Farbkanäle gewonnen werden.

5. Verfahren nach einem der vorhergehenden Ansprüche, **dadurch gekennzeichnet, dass** die Steuerdaten aus den transformierten, quantisierten oder dequantisierten Koeffizienten der Bilddaten gewonnen werden.

6. Verfahren nach Anspruch 5, **dadurch gekennzeichnet, dass** die Steuerdaten aus den transformierten, quantisierten oder dequantisierten Koeffizienten des Gesamtbildes gewonnen werden.

7. Verfahren nach einem der vorhergehenden Ansprüche, **dadurch gekennzeichnet, dass** die Steuerdaten aus den transformierten, quantisierten oder dequantisierten Koeffizienten, die den tiefsten Frequenzen (DC-Komponenten bei JPEG) entsprechen, gewonnen werden.

8. Verfahren nach Anspruch 7, **dadurch gekennzeichnet, dass** Steuerdaten zur Auswahl der zu verwendenden Gradationskennlinien für die Dichten bei der Wiedergabe der digitalen Bilddaten gebildet werden.

9. Verfahren nach einem der vorhergehenden Ansprüche, **dadurch gekennzeichnet, dass** die Steuerdaten aus den höher frequenten Anteilen der transformierten, quantisierten oder dequantisierten Koeffizienten (AC-Komponenten bei JPEG) gewonnen werden.

10. Verfahren nach Anspruch 9, **dadurch gekennzeichnet, dass** Bilddaten, die extrem hohe Frequenzen aufweisen als Computergrafik identifiziert und nicht bezüglich Filmeigenschaften korrigiert werden.

11. Verfahren nach Anspruch 9, **dadurch gekennzeichnet, dass** Parameter für die Verschärfung der Bilddaten sehr klein gewählt werden, falls die Werte der hochfrequenten Komponenten konstant sehr hoch sind.

12. Verfahren nach Anspruch 9, **dadurch gekennzeichnet, dass** Verschärfungsparameter klein gewählt werden, wenn die hohen Frequenzen bei den Komponenten der komprimierten Daten unterbesetzt sind.

13. Verfahren nach Anspruch 9, **dadurch gekennzeichnet, dass** Verschärfungsparameter anhand des Frequenzgangs der Komponenten der komprimierten Daten gewählt werden.

14. Verfahren nach Anspruch 9, **dadurch gekennzeichnet, dass** bei Erkennen einer Vorzugsrichtung anhand aller Komponenten der komprimierten Daten auf verwackelte Bilder geschlossen wird und hohe Frequenzen in Verwacklungsrichtung angehoben werden.

15. Verfahren nach Anspruch 9, **dadurch gekennzeichnet, dass** bei Dominieren der Komponenten von tieferen Frequenzen Parameter der Rausch- oder Kornunterdrückung größer gewählt werden.

16. Verfahren nach Anspruch 9, **dadurch gekennzeichnet, dass** anhand des Frequenzespektrums der Vergrößerungsfaktor für die Bildwiedergabe gesteuert wird.

17. Verfahren nach Anspruch 7 und 9, **dadurch gekennzeichnet, dass** die für die Bildbearbeitung verwendete Gradationskennlinie bzw. der Gammawert anhand des Verhältnisses von hoch- zu niederfrequenten Komponenten gewählt wird.

18. Verfahren nach Anspruch 5, **dadurch gekennzeichnet, dass** lokale Steuerdaten aus den transformierten, quantisierten oder dequantisierten Koeffizienten einzelner Blöcke der komprimierten Daten gewonnen werden.

19. Verfahren nach Anspruch 18, **dadurch gekennzeichnet, dass** die Wahl von Filtern und/oder Kennlinien, welche auf den Blöcken zugeordnete Bilddaten angewandt werden, abhängig von dem Wert ausgewählter Frequenzbereiche der komprimierten Bilddaten dieser Blöcke erfolgt.

20. Verfahren nach Anspruch 18, **dadurch gekennzeichnet, dass** die Wahl von Filtern und/oder Kennlinien, welche auf den Blöcken zugeordnete Bilddaten angewandt werden, abhängig vom Verhältnis hoch- zu niederfrequenter Komponenten der komprimierten Bilddaten dieser Blöcke erfolgt.

21. Verfahren nach Anspruch 18, **dadurch gekennzeichnet, dass** die Wahl von Filtern und/oder Kennlinien, welche auf den Blöcken zugeordnete Bilddaten angewandt werden, abhängig von Häufungen der Komponenten der komprimierten Bilddaten innerhalb der Blöcke erfolgt.

22. Verfahren nach Anspruch 18, **dadurch gekennzeichnet, dass** die Komponenten der komprimierten Bilddaten der Chrominanzbilder blockweise zur Motiverkennung ausgewertet werden.
